# EUROPEAN PATENT APPLICATION

(11) **EP 2 618 265 A1**
(43) Date of publication of application: **24.07.2013**
(21) Application number: 13150209.8
(22) Date of filing: 04.01.2013
(51) Int. Cl.: G06F 13/42, G06F 11/32

(54) **Electronic systems and management methods**

(30) Priority: 19.01.2012 TW 101102112
(71) Applicant: Acer Incorporated, Taipei Hsien 221 (TW)
(72) Inventor: Sip, Kim Yeung, 221 Taipei Hsien (TW)
(74) Representative: Becker Kurig Straus

(57) **Abstract**

A management method is provided, suitable for an electronic system having electronic devices connected in a daisy-chain configuration. The management method includes the steps of: arranging the order of the electronic devices, wherein universal unique identifiers corresponding to the electronic devices are obtained by sequentially connecting the electronic devices with the host; obtaining shapes and outward colors of the electronic devices according to the universal unique identifiers of the electronic devices; forming a chart according to the arrangement order, the shapes and the outward colors of the electronic devices; and displaying the chart on the monitor and/or the host to show a characteristic of each of the electronic devices.

## Description

### CROSS REFERENCE TO RELATED APPLICATIONS

This Application claims priority of Taiwan Patent Application No. 101102112, filed on Jan. 19, 2012, the entirety of which is incorporated by reference herein.

### BACKGROUND OF THE INVENTION

### Field of the Invention

The present invention relates to electronic systems, and in particular relates to electronic systems having thunderbolt interfaces.

### Description of the Related Art

Recently, computers and networks have made many innovative functions more effective. New peripheral devices, such as internet units and external storage units, can easily be connected to computers or notebooks. However, there may be various peripheral devices connected to the host (e.g., computer) and the user can not determine which peripheral device is currently being used. In addition, the user can not manage those peripheral devices. Thus, there is a need for an electronic system and a management method thereof to increase the convenience of usage.

### BRIEF SUMMARY OF THE INVENTION

In light of the previously described problems, the invention provides an embodiment of a management method, suitable for an electronic system having electronic devices connected in a daisy-chain configuration. The management method comprises the steps of: arranging the order of the electronic devices, wherein universal unique identifiers corresponding to the electronic devices are obtained by sequentially connecting the electronic devices with the host; obtaining shapes and outward colors of the electronic devices according to the universal unique identifiers of the electronic devices; forming a chart according to the arrangement order, the shapes and the outward colors of the electronic devices; displaying the chart on the monitor and/or the host to show a characteristic of each of the electronic devices.

The invention also provides an electronic system. The electronic system comprises a plurality of electronic devices and a control module. The electronic devices are connected in a daisy-chain configuration. The control module obtains an arrangement order of the electronic devices, wherein universal unique identifiers correspond to the electronic devices by sequentially connecting the electronic devices with the host. Shapes and outward colors of the electronic devices are obtained according to the universal unique identifiers of the electronic devices. A chart is formed according to the arrangement order, the shapes and the outward colors of the electronic devices. The chart is displayed on the monitor and/or the host to show a characteristic of each of the electronic devices.

A detailed description is given in the following embodiments with reference to the accompanying drawings.

### BRIEF DESCRIPTION OF THE DRAWINGS

The present invention can be more fully understood by reading the subsequent detailed description and examples with references made to the accompanying drawings, wherein:

FIG.1 illustrates an embodiment of the electronic system for performing a performance control process;

FIG.2 illustrates a schematic view of the electronic system;

FIG. 3 illustrates an embodiment of the chart of the invention;

FIG. 4 illustrates another embodiment of the chart of the invention

FIG. 5 illustrates another embodiment of the chart of the invention; and

FIG. 6 illustrates a flowchart of the management method of the invention.

### DETAILED DESCRIPTION OF THE INVENTION

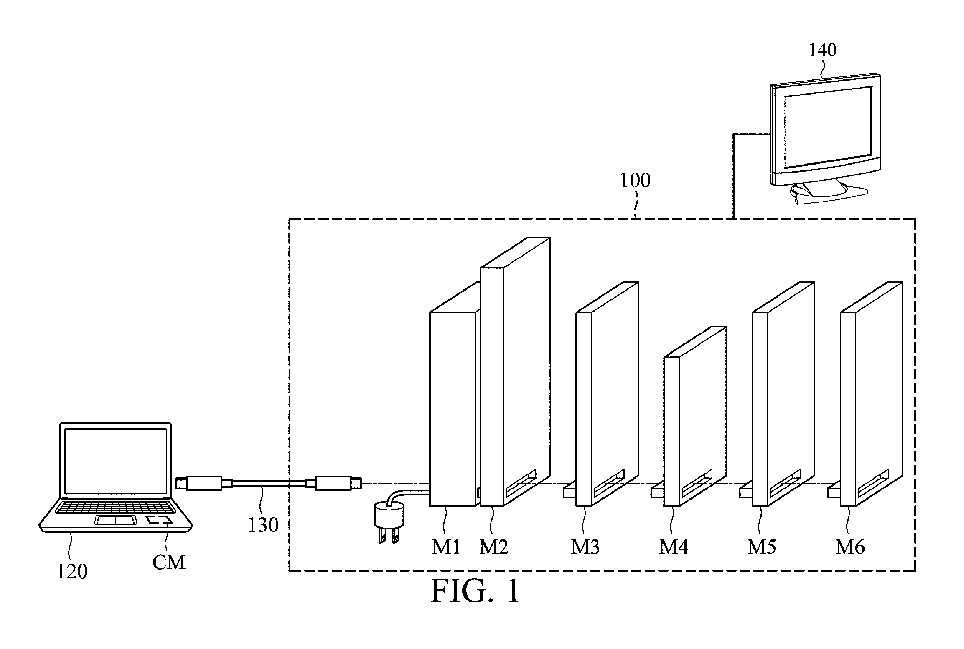

FIG.1 illustrates an embodiment of the electronic system. As shown in FIG. 1, an electronic system 100 has electronic devices M1∼M6 and a control module CM. In the embodiment, the control module CM can be disposed in one of the electronic devices M1∼M6 or in a host 120 coupled to the electronic system 100 through a transmission cable 130, but is not limited thereto. The electronic devices M1∼M6 are overlapped in a direction. In addition, each of the electronic devices M1∼M6 has a high speed transmission interface, e.g., a thunderbolt interface, such that the electronic devices M1∼M6 use a transport protocol compatible with a thunderbolt interface to communicate with a host 120. The electronic devices M1∼M6 are coupled in a daisy-chain configuration. The electronic system 100 can be coupled to a displayer 140, such that the electronic system 100 can show some contents on the displayer 140 without the host 120.

In detail, each of the electronic devices M1∼M6 can be any of various kinds of peripheral devices. For example, the electronic device M1 can be an I/O expander. The electronic device M2 can be a graphics processing unit (GPU) device. The electronic device M3 can be an optical disk drive. The electronic devices M4 and M5 can be hard disk drivers (HDD). The electronic device M6 can be a TV box. In other words, the electronic devices M1∼M6 respectively have the graphics processing unit, the central processing unit, a storage unit, a TV box processing unit and/or an optical disk control unit.

Note that the number and the type of the electronic devices are provided for illustration, but are not limited thereto. Any electronic device having the thunderbolt interface, any electronic device having interfaces faster than the thunderbolt interface or any electronic device coupled in the daisy-chain configuration can serve as the electronic device of the invention.

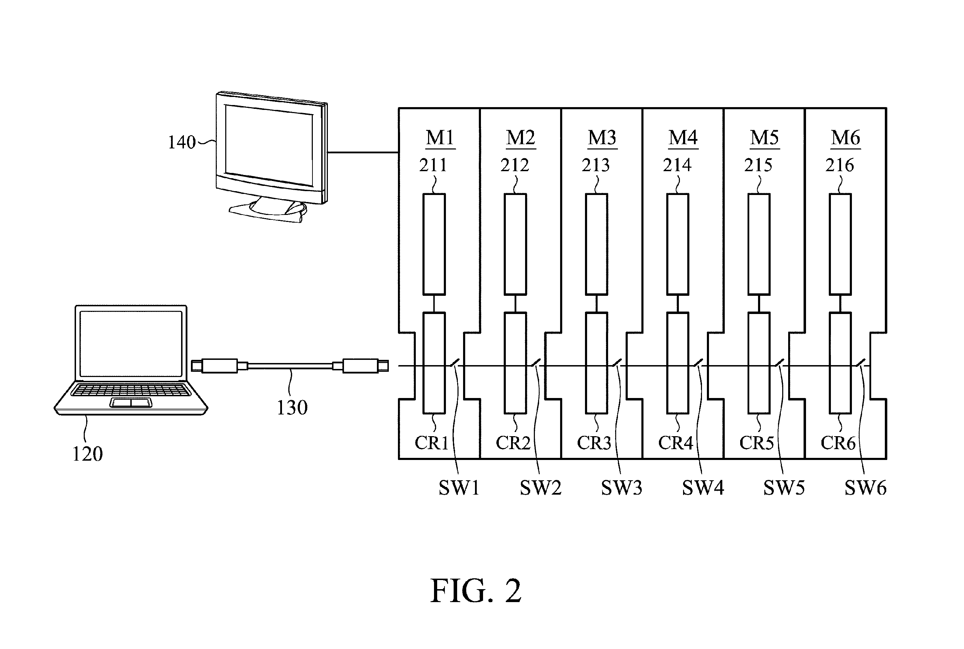

FIG. 2 illustrates a schematic view of the electronic system. As shown in FIG. 2, the electronic devices M1∼M6 have switching units SW1∼SW6, controllers CR1∼CR6 and electrically-erasable programmable read-only memories (EEPROM) 211∼216, respectively. The control module CM enables one of the electronic devices M1∼M6 to connect with a host in turn, thereby obtaining universal unique identifiers (UUID) corresponding to the electronic devices M1∼M6. An order of obtainment of the universal unique identifiers of the electronic devices indicates an arrangement order of the electronic devices M1∼M6.

For example, the electronic device M1 is electrically and directly connected to the host 120 through the transmission cable 130. The control module CM obtains a universal unique identifier UUID1 of the electronic device M1 of the electronic system 100 before the switching unit SW1 of the electronic device M1 is turned on, such that the switching unit SW1 operates in a close circuit state to determine whether another electronic device (e.g., electronic device M2) is electrically connected to the electronic device M1. When the control module CM detects that there is no electronic device except for the electronic device M1, the control module CM determines that the electronic device M1 is the last sorted electronic device.

When the electronic device M2 is connected to the electronic device M1, the control module CM turns off the switching units SW1 and SW2, such that the switching units SW1 and SW2 operate in the open circuit state (the switching unit SW1 changes from the close circuit state to the open circuit state). Therefore, the control module CM only obtains the universal unique identifier UUID1 of the electronic device M1 of the electronic system 100 before the switching unit SW1 of the electronic device M1 is turned on, such that the switching unit SW1 operates in a close circuit state in order to determine whether another electronic device (e.g., electronic device M2) is electrically connected to the electronic device M1. The control module CM can obtain a universal unique identifier UUID2 of the electronic device M2 of the electronic system 100 due to the connection between the electronic devices M2 and M1 before the switching unit SW2 of the electronic device M2 is turned on, such that it can be determined whether another electronic device (e.g., electronic device M3) is electrically connected to the electronic device M2, wherein the electronic device M1 is electrically connected between the electronic device M2 and the host 120. When the control module CM detects that there is no electronic device except for the electronic devices M1 and M2, the control module CM determines that the electronic device M2 is the last sorted electronic device.

Details of the procedure of the other electronic devices (e.g., electronic devices M3∼M6) are similar to the procedure of the electronic devices M1∼M2, therefore, the details of the other electronic devices are omitted for brevity. The control module CM can obtain the arrangement order of the electronic devices M1∼M6 and universal unique identifiers corresponding to the electronic devices M1∼M6 at the same time by sequentially connecting the electronic devices M1∼M6 with the host 120.

The EEPROMs 211∼216 have respectively stored the universal unique identifier (UUID) of the electronic devices M1∼M6. For example, the UUID1 of the electronic device M1 has any information of the electronic device M1, such as a model, a model number, a shape or outward colors, etc. When the control module CM communicates with the electronic device M1, the control module CM obtains the universal unique identifier UUID1 of the electronic device M1 from the EEPROM 211, such that the control module CM can obtain the shape and the outward colors of the electronic device M1 according to the universal unique identifier UUID1. Details of the procedure of the other electronic devices (e.g., electronic devices M2∼M6) are similar to the procedure of the electronic device M1, therefore, the details of the other electronic devices are omitted for brevity.

Therefore, the control module CM can obtain the arrangement order of the electronic devices M1∼M6 and the universal unique identifiers of the electronic devices M1∼M6 by sequentially connecting the electronic devices with the host 120, such that the control module CM can obtain the shapes and the outward colors of the electronic devices M1∼M6 according to the universal unique identifiers of the electronic devices M1∼M6. The chart is formed by the arrangement order, shapes and outward colors of the electronic devices M1∼M6, such that the chart is shown on the displayer 140 and/or the host 120 to describe the characteristics of the electronic devices M1∼M6. The characteristics include the product specifications, the usage rates and temperatures, but are not limited thereto.

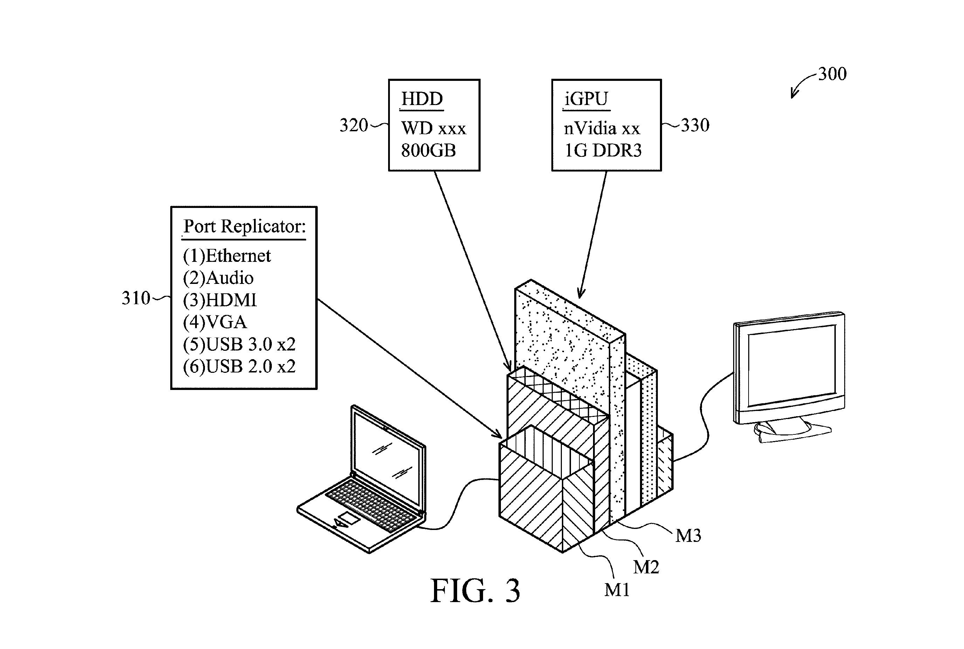

FIG. 3 illustrates an embodiment of the chart of the invention. As shown in FIG. 3, the chart 300 is shown on the host 120 or the displayer 140 with the arrangement orders, the shapes and the outward colors of the electronic devices M1∼M6, and the product specifications of the electronic devices M1∼M6 are respectively shown with the arrangement orders, the shapes and the outward colors of the electronic devices M1∼M6. For example, the block 310 is the product specification of the electronic device M1, the block 320 is the product specification of the electronic device M2, and the block 330 is the product specification of the electronic device M3. Therefore, the users can know the hardware information of the electronic devices M1∼M6 quickly.

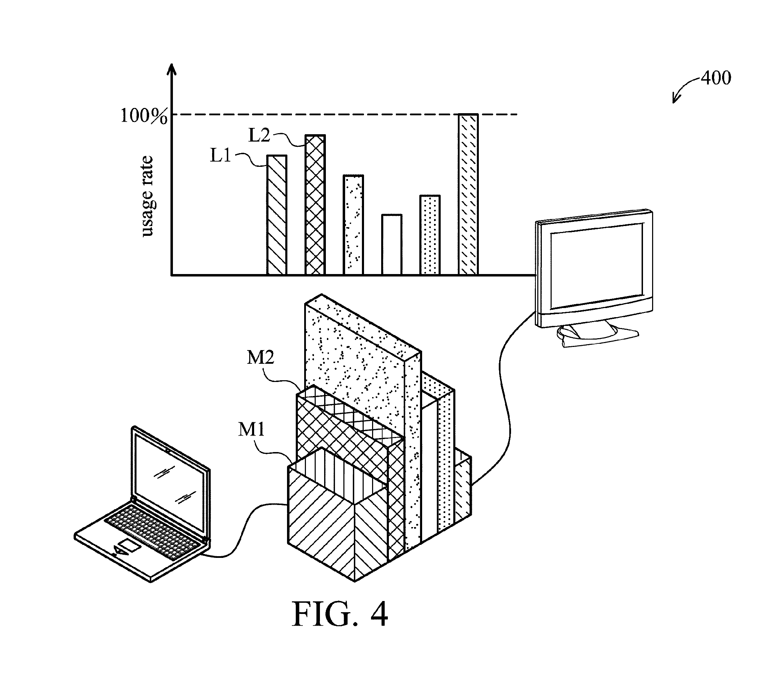

FIG. 4 illustrates another embodiment of the chart of the invention. As shown in FIG. 4, the chart 400 is shown on the host 120 or the displayer 140 with the arrangement order, the shapes and the outward colors of the electronic devices M1∼M6 to describe the usage rates/performances of the electronic devices M1∼M6. For example, the color of the line L1 is corresponding to the color of the electronic device M1, the color of the line L2 is corresponding to the color of the electronic device M2, and the color of the line L3 is corresponding to the color of the electronic device M3, such that the users can get the usage rate/performances of each of the electronic devices M1∼M6.

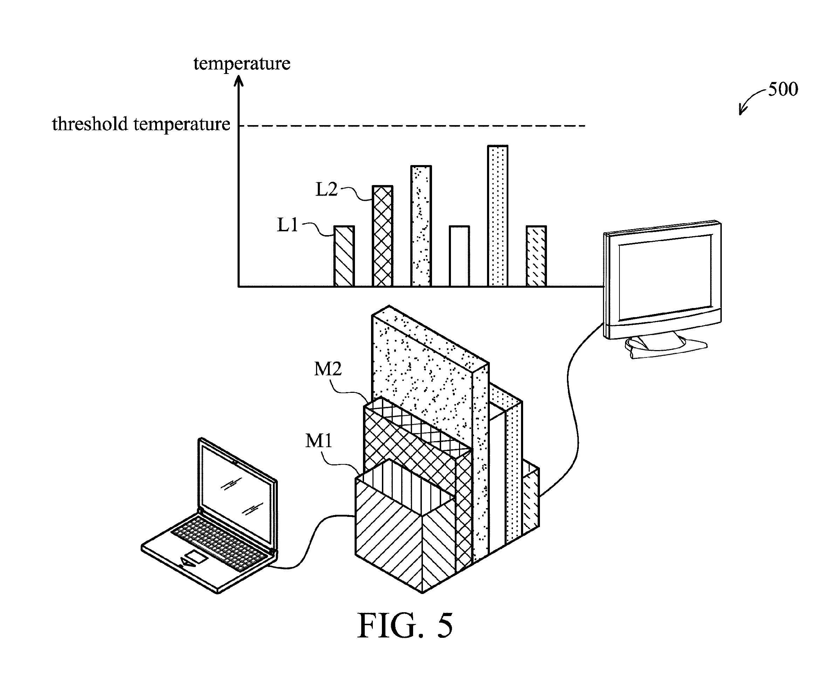

FIG. 5 illustrates another embodiment of the chart of the invention. As shown in FIG. 5, the chart 500 shows the temperatures of the electronic devices M1∼M6 with the arrangement order, the shapes, and the outward colors of the electronic devices M1∼M6, such that users can get the current temperatures of each of the electronic devices M1∼M6 to protect each electronic device from having temperatures which exceed the threshold temperature. Note that the charts can be pie charts, line charts, but are not limited thereto.

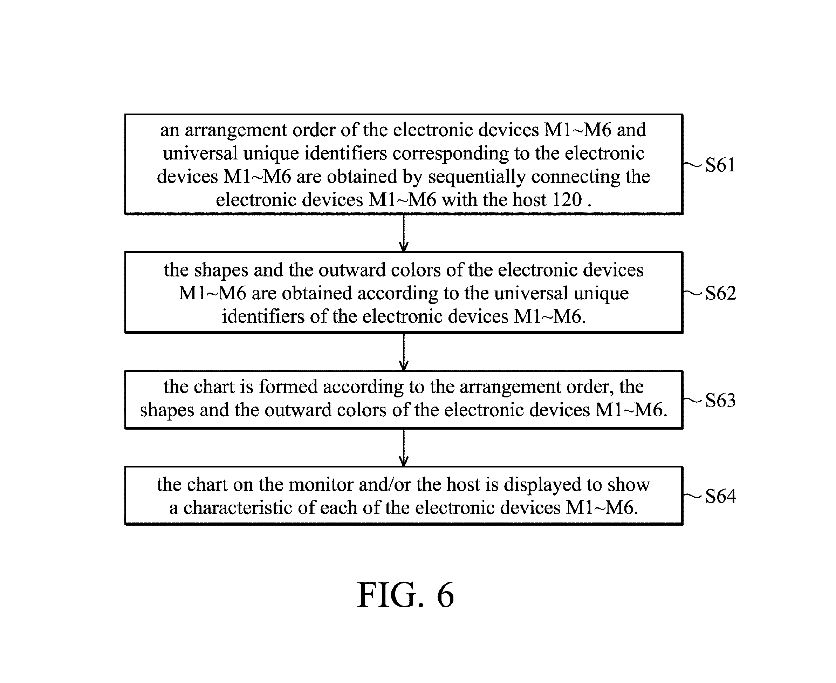

FIG. 6 illustrates a flowchart of the management method of the invention suitable for the electronic system 100 having the electronic devices (e.g., electronic devices M1∼M6) coupled to a host (e.g., the host 120) and/or a displayer (e.g., the displayer 140) in a daisy-chain configuration. As shown in FIG. 6, the management method includes the following steps.

In step S61, an arrangement order of the electronic devices M1∼M6 and universal unique identifiers corresponding to the electronic devices M1∼M6 are obtained by sequentially connecting the electronic devices M1∼M6 with the host 120 (or the control module CM). In step S62, the shapes and the outward colors of the electronic devices M1∼M6 are obtained according to the universal unique identifiers of the electronic devices M1∼M6. In step S63, the chart is formed according to the arrangement order, the shapes and the outward colors of the electronic devices M1∼M6. In step S64, the chart on the monitor and/or the host is displayed to show a characteristic of each of the electronic devices M1∼M6.

The foregoing has outlined features of several embodiments so that those skilled in the art may better understand the detailed description. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the spirit and scope of the present disclosure, and that they may make various changes, substitutions and alterations herein without departing from the spirit and scope of the present disclosure.

## Claims

1. An electronic system, comprising:
a plurality of electronic devices, coupled to a host and/or a displayer in a daisy-chain configuration;
a control module, obtaining an arrangement order of the electronic devices and universal unique identifiers corresponding to the electronic devices by sequentially connecting the electronic devices with the host, thereby obtaining shapes and outward colors of the electronic devices according to the universal unique identifiers of the electronic devices, and forming a chart according to the arrangement order, the shapes and the outward colors of the electronic devices, thereby displaying the chart on the monitor and/or the host to show a characteristic of each of the electronic devices.

2. The electronic system as claimed in claim 1, wherein the characteristic comprises temperatures of each of the electronic devices, such that the displayer and/or the host show the temperatures of each of the electronic devices with the chart.

3. The electronic system as claimed in claim 1, wherein the characteristic comprises usage rate/performances of each of the electronic devices, such that the displayer and/or the host show the usage rate/performances of each of the electronic devices with the chart.

4. The electronic system as claimed in claim 1, wherein the characteristic comprises product specifications of each of the electronic devices, such that the displayer and/or the host show the product specifications of each of the electronic devices with the chart.

5. The electronic system as claimed in claim 1, wherein the electronic devices are overlapped in a direction and a transport protocol compatible with a thunderbolt interface is used to communicate with the host.

6. The electronic system as claimed in claim 1, wherein the electronic devices have a graphics processing unit, a central processing unit, storage unit, a TV box and/or an optical disk drive.

7. A management method, suitable for an electronic system having electronic devices coupled to a host and/or a displayer in a daisy-chain configuration, comprising:
obtaining an arrangement order of the electronic devices and universal unique identifiers corresponding to the electronic devices by sequentially connecting the electronic devices with the host;
obtaining shapes and outward colors of the electronic devices according to the universal unique identifiers of the electronic devices;
forming a chart according to the arrangement order, the shapes and the outward colors of the electronic devices; and
displaying the chart on the monitor and/or the host to show a characteristic of each of the electronic devices.

8. The management method as claimed in claim 7, wherein the characteristic comprises temperatures of each of the electronic devices, such that the displayer and/or the host show the temperatures of each of the electronic devices with the chart.

9. The management method as claimed in claim 7, wherein the characteristic comprises usage rate/performances of each of the electronic devices, such that the displayer and/or the host show the usage rate/performances of each of the electronic devices with the chart.

10. The management method as claimed in claim 7, wherein the characteristic comprises product specifications of each of the electronic devices, such that the displayer and/or the host show the product specifications of each of the electronic devices with the chart.

11. The management method as claimed in claim 7, wherein the electronic devices are overlapped in a direction and a transport protocol compatible with a thunderbolt interface is used to communicate with the host.

12. The management method as claimed in claim 7, wherein the electronic devices have a graphics processing unit, a central processing unit, storage unit, a TV box and/or an optical disk drive.
